(19) Europäisches Patentamt
European Patent Office
Office européen des brevets

(11) EP 1 401 915 B1

(12) **EUROPÄISCHE PATENTSCHRIFT**

(45) Veröffentlichungstag und Bekanntmachung des Hinweises auf die Patenterteilung:
**08.03.2006 Patentblatt 2006/10**

(21) Anmeldenummer: **02742982.8**

(22) Anmeldetag: **10.05.2002**

(51) Int Cl.:
***C08G 69/48*** (2006.01) ***C08K 5/3435*** (2006.01)
***C08G 69/04*** (2006.01) ***C08K 5/3432*** (2006.01)

(86) Internationale Anmeldenummer:
**PCT/EP2002/005149**

(87) Internationale Veröffentlichungsnummer:
**WO 2002/092664 (21.11.2002 Gazette 2002/47)**

(54) **SYSTEM AUS EINEM POLYAMID UND EINEM 2,6-DIAMINOPYRIDIN-DERIVAT UND VERFAHREN ZUR HERSTELLUNG EINES SOLCHEN SYSTEMS**

SYSTEM MADE FROM A POLYAMIDE AND A 2,6-DIAMINOPYRIDINE DERIVATIVE AND METHOD FOR PRODUCTION OF SAID SYSTEM

SYSTEME COMPOSE D'UN POLYAMIDE ET D'UN DERIVE DE 2,6-DIAMINOPYRIDINE ET PROCEDE DE PREPARATION D'UN SYSTEME DE CE TYPE

(84) Benannte Vertragsstaaten:
**AT BE CH CY DE DK ES FI FR GB GR IE IT LI LU MC NL PT SE TR**
Benannte Erstreckungsstaaten:
**RO SI**

(30) Priorität: **15.05.2001 DE 10123733**
**15.01.2002 DE 10201403**

(43) Veröffentlichungstag der Anmeldung:
**31.03.2004 Patentblatt 2004/14**

(73) Patentinhaber: **BASF Aktiengesellschaft**
**67056 Ludwigshafen (DE)**

(72) Erfinder:
- **BEVER, Paul-Michael**
**67434 Neustadt (DE)**
- **LAMM, Gunther**
**67454 Hassloch (DE)**
- **VON BERNSTORFF, Bernd-Steffen**
**67157 Wachenheim (DE)**
- **RIEKER, Christopher, William**
**67112 Mutterstadt (DE)**

(56) Entgegenhaltungen:
**EP-A- 0 843 696** **WO-A-97/05189**
**WO-A-98/50610** **WO-A-99/46323**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein System aus

a) einem Polyamid, das ein an die Polymerkette chemisch gebundenes sterisch gehindertes Piperidin-Derivat enthält, und
b) einem 2,6-Diaminopyridin-Derivat,

sowie ein Verfahren zur Herstellung eines solchen Systems.

Die Verwendung von Polymeren, insbesondere Polyamiden, zur Herstellung von Fasern und Garnen und die Verwendung solcher Garne zur Herstellung von Bodenbelägen, wie Teppichen, ist allgemein bekannt, beispielsweise aus: Ullmann's Encyclopedia of Industrial Chemistry, 5. Ed., Vol. A10, VCH Verlagsgesellschaft mbH, Weinheim, Deutschland, 1987, Seite 567-579.

Die Bodenbeläge werden üblicherweise gefärbt, beispielsweise einfarbig oder gemustert, eingesetzt. Die Einstellung eines Farbtons erfolgt dabei zumeist durch eine Kombination mehrerer, wie zwei oder drei, Farbstoffe.

Nachteilig an den bekannten Bodenbelägen ist, daß sie unter Lichteinfluß und der durch das Licht bewirkten Erwärmung verschießen, während ein solches Verschießen an beispielsweise durch Möbel beschatteten Stellen nicht auftritt. Unter Verschießen versteht man eine Farbänderung des Bodenbelags, die darauf zurückzuführen ist, daß eine Farbkomponente einer Farbstoff-Kombination durch den Lichteinfluß an Farbintensität stärker verliert als die anderen Farbstoffe. Setzt man beispielsweise eine Farbstoff-Kombination aus einem roten, einem gelben und einem blauen Farbstoff ein und verliert der rote Farbstoff unter dem Lichteinfluß stärker an Intensität als anderen Farbstoffe, so wird der Bodenbelag allmählich grünstichig, da dann die Intensitäten des gelben und blauen Farbstoffs gegenüber der Intensität des roten Farbstoffs überwiegen.

Räumt man nun die auf dem Bodenbelag aufgestellten Möbel um, so grenzen durch den Lichteinfluß verschossene Stellen des Bodenbelags an solche Stellen des Bodenbelags, die infolge der Beschattung durch die Möbel nicht verschossen sind. Der Bodenbelag ist somit anschließend unerwünschterweise optisch uneinheitlich.

Dieses Problem liegt nicht allein bei Bodenbelägen vor, sondern bei jedem geometrischen Gebilde, wie Fasern, Flächengebilden oder Formkörpern, vor.

Der vorliegenden Erfindung lag die Aufgabe zugrunde, Polyamide zur Verfügung zu stellen, aus denen Fasern, Flächengebilde oder Formkörper, insbesondere Garne hergestellt werden können, die die genannten Nachteile nicht aufweisen, insbesondere nicht verschießen, sowie Verfahren, die die Herstellung solcher Polyamide auf technisch einfache und wirtschaftliche Weise ermöglichen.

Im Sinne der vorliegenden Erfindung wird dabei ein System als nicht verschießend betrachtet, das in Form eines gefärbten Garns oder Teppichs nach einer Bestrahlung gemäß DIN 75202 (Entwurf Mai 1996, Expositionsbedingung A gemäß Tabelle 2 dieser DIN) gegenüber einem unbestrahlten Garn oder Teppich mit der gleichen Anfärbung keine für das menschliche Auge sichtbare Farbänderung aufweist.

Demgemäß wurde das eingangs definierte System sowie ein Verfahren zur Herstellung eines solchen Systems gefunden.

Erfindungsgemäß erhält man Komponente a) des Systems durch Polymerisation mindestens eines zur Bildung eines Polyamids geeigneten Monomers und eines sterisch gehinderten Piperidin-Derivats, das eine zur Amidbildung hinsichtlich der Polymerhauptkette des Polyamids fähige funktionelle Gruppe aufweist.

Unter Polyamiden werden Homopolymere, Copolymere, Mischungen und Pfropfungen von synthetischen langkettigen Polyamiden verstanden, die als wesentlichen Bestandteil wiederkehrend Amid-Gruppen in der Polymer-Hauptkette aufweisen. Beispiele solcher Polyamide sind Nylon 6 (Polycaprolactam), Nylon 6,6 (Polyhexamethylenadipamid), Nylon 4,6 (Polytetramethylenadipamid), Nylon 6,10 (Polyhexamethylensebacamid), Nylon 7 (Polyenantholactam), Nylon 11 (Polyundecanolactam), Nylon 12 (Palydodecanolactam). Diese Polyamide tragen bekanntermaßen den generischen Namen Nylon. Unter Polyamiden werden auch die sogenannten Aramide verstanden (aromatische Polyamide), wie Poly-metaphenylen-isophthalamid (NOMEX ® Faser, US-A-3,287,324) oder Poly-paraphenylen-terephthalamid (KEVLAR ® Faser, US-A-3,671,542).

Die Herstellung von Polyamiden kann prinzipiell nach zwei Verfahren erfolgen.

Bei der Polymerisation aus Dicarbonsäuren und Diaminen, wie auch bei der Polymerisation aus Aminosäuren oder deren Derivaten, wie Aminocarbonsäurenitrilen, Aminocarbonsäureamiden, Aminocarbonsäureestern oder Aminocarbonsäuresalzen, reagieren die Amino- und Carboxyl-Endgruppen der Ausgangsmonomere oder Ausgangsoligomere miteinander unter Bildung einer Amid-Gruppe und Wasser. Das Wasser kann anschließend von der Polymermasse entfernt werden. Bei der Polymerisation aus Carbonsäureamiden reagieren die Amino- und Amid-Endgruppen der Ausgangsmonomere oder Ausgangsoligomere miteinander unter Bildung einer Amid-Gruppe und Ammoniak. Der Ammoniak kann anschließend von der Polymermasse entfernt werden. Diese Polymerisationsreaktion bezeichnet man üblicherweise als Polykondensation.

Die Polymerisation aus Lactamen als Ausgangsmonomeren oder Ausgangsoligomeren bezeichnet man üblicherweise als Polyaddition.

Solche Polyamide können nach an sich bekannten Verfahren, wie sie beispielsweise in DE-A-14 95 198, DE-A-25 58 480, EP-A-129 196 oder in: Polymerization Processes, Interscience, New York, 1977, S. 424-467, insbesondere S. 444-446, beschrieben sind, erhalten werden aus Monomeren ausgewählt aus der Gruppe bestehend aus Lactamen, omega-Aminocarbonsäuren, omega-Aminocarbonsäurenitrilen, omega-Aminocarbonsäureamiden, omega-Aminocarbonsäuresalze, omega-Aminocarbonsäureester, äquimolaren Mischungen aus Diaminen und Dicarbonsäuren, Dicarbonsäure/Diamin-Salzen, Dinitrilen und Diaminen oder Gemischen solcher Monomere.

Als Monomere kommen

Monomere oder Oligomere eines $C_2$ - bis $C_{20}$ - vorzugsweise $C_2$ - bis $C_{18}$ - arylaliphatischen oder vorzugsweise aliphatischen Lactams, wie Enantholactam, Undecanolactam, Dodecanolactam oder Caprolactam,

Monomere oder Oligomere von $C_2$ - bis $C_{20}$ -, vorzugsweise $C_3$ - bis $C_{18}$ - Aminocarbonsäuren, wie 6-Aminocapronsäure, 11-Aminoundecansäure, sowie deren Dimere, Trimere, Tetramere, Pentamere oder Hexamere, sowie deren Salze, wie Alkalisalze, beispielsweise Lithium-, Natrium-, Kalium-Salze,

$C_2$ - bis $C_{20}$ -, vorzugsweise $C_3$ - bis $C_{18}$ - Aminocarbonsäurenitrilen, wie 6-Aminocapronitril, 11-Aminoundecansäurenitril, Monomere oder Oligomere von $C_2$ - bis $C_{20}$ - Aminosäuramiden, wie 6-Aminocapronsäureamid, 11-Aminoundecansäureamid sowie deren Dimere, Trimere, Tetramere, Pentamere oder Hexamere,

Ester, vorzugsweise $C_1$-$C_4$-Alkylester, wie Methyl-, Ethyl-, n-Propyl-, i-Propyl-, n-Butyl-, i-Butyl-, s-Butyl-ester, von $C_2$ - bis $C_{20}$ -, vorzugsweise $C_3$ - bis $C_{18}$ - Aminocarbonsäuren, wie 6-Aminocapronsäureester, beispielsweise 6-Aminocapronsäuremethylester, 11-Aminoundecansäureester, beispielsweise 11-Aminoundecansäuremethylester,

Monomere oder Oligomere eines $C_2$ - bis $C_{20}$ -, vorzugsweise $C_2$ - bis $C_{12}$ - Alkyldiamins, wie Tetramethylendiamin oder vorzugsweise Hexamethylendiamin,

mit einer $C_2$ - bis $C_{20}$ -, vorzugsweise $C_2$ - bis $C_{14}$ - aliphatischen Dicarbonsäure oder deren Mono- oder Dinitrile, wie Sebacinsäure, Dodecandisäure, Adipinsäure, Sebacinsäuredinitril, Decansäuredinitril oder Adipodinitril,

sowie deren Dimere, Trimere, Tetramere, Pentamere oder Hexamere,

Monomere oder Oligomere eines $C_2$ - bis $C_{20}$ -, vorzugsweise $C_2$ - bis $C_{12}$ - Alkyldiamins, wie Tetramethylendiamin oder vorzugsweise Hexamethylendiamin,

mit einer $C_8$ - bis $C_{20}$ -, vorzugsweise $C_8$ - bis $C_{12}$ - aromatischen Dicarbonsäure oder deren Derivate , beispielsweise Chloride, wie 2,6-Naphthalindicarbonsäure, vorzugsweise Isophthalsäure oder Terephthalsäure,

sowie deren Dimere, Trimere, Tetramere, Pentamere oder Hexamere,

Monomere oder Oligomere eines $C_2$ - bis $C_{20}$ -, vorzugsweise $C_2$ - bis $C_{12}$ - Alkyldiamins, wie Tetramethylendiamin oder vorzugsweise Hexamethylendiamin,

mit einer $C_9$ - bis $C_{20}$ -, vorzugsweise $C_9$ - bis $C_{18}$ - arylaliphatischen Dicarbonsäure oder deren Derivate, beispielsweise Chloride, wie o-, m- oder p-Phenylendiessigsäure,

sowie deren Dimere, Trimere, Tetramere, Pentamere oder Hexamere, Monomere oder Oligomere eines $C_6$ - bis $C_{20}$ -, vorzugsweise $C_6$ - bis $C_{10}$ - aromatischen Diamins, wie m- oder p-Phenylendiamin,

mit einer $C_2$ - bis $C_{20}$ -, vorzugsweise $C_2$ - bis $C_{14}$ - aliphatischen Dicarbonsäure oder deren Mono- oder Dinitrile, wie Sebacinsäure, Dodecandisäure, Adipinsäure, Sebacinsäuredinitril, Decansäuredinitril oder Adipodinitril,

sowie deren Dimere, Trimere, Tetramere, Pentamere oder Hexamere, Monomere oder Oligomere eines $C_6$ - bis $C_{20}$ - vorzugsweise $C_6$ - bis $C_{10}$ - aromatischen Diamins, wie m- oder p-Phenylendiamin,

mit einer $C_8$ - bis $C_{20}$ -, vorzugsweise $C_8$ - bis $C_{12}$ - aromatischen Dicarbonsäure oder deren Derivate , beispielsweise Chloride, wie 2,6-Naphthalindicarbonsäure, vorzugsweise Isophthalsäure oder Terephthalsäure,

sowie deren Dimere, Trimere, Tetramere, Pentamere oder Hexamere, Monomere oder Oligomere eines $C_6$ - bis $C_{20}$ - vorzugsweise $C_6$ - bis $C_{10}$ - aromatischen Diamins, wie m- oder p-Phenylendiamin,

mit einer Cg - bis $C_{20}$ -, vorzugsweise $C_9$ - bis $C_{18}$ - arylaliphatischen Dicarbonsäure oder deren Derivate, beispielsweise Chloride, wie o-, m- oder p-Phenylendiessigsäure,

sowie deren Dimere, Trimere, Tetramere, Pentamere oder Hexamere, Monomere oder Oligomere eines $C_7$ - bis $C_{20}$ -, vorzugsweise $C_8$ - bis $C_{18}$ - arylaliphatischen Diamins, wie m- oder p-Xylylendiamin, mit einer $C_2$ - bis $C_{20}$ -, vorzugsweise $C_2$ - bis $C_{14}$ - aliphatischen Dicarbonsäure oder deren Mono- oder Dinitrile, wie Sebacinsäure, Dodecandisäure, Adipinsäure, Sebacinsäuredinitril, Decansäuredinitril oder Adipodinitril,

sowie deren Dimere, Trimere, Tetramere, Pentamere oder Hexamere, Monomere oder Oligomere eines $C_7$ - bis $C_{20}$ -, vorzugsweise $C_8$ - bis $C_{18}$ - arylaliphatischen Diamins, wie m- oder p-Xylylendiamin, mit einer $C_6$ - bis $C_{20}$ -, vorzugsweise $C_6$ - bis $C_{10}$ - aromatischen Dicarbonsäure oder deren Derivate , beispielsweise Chloride, wie 2,6-Naphthalindicarbonsäure, vorzugsweise Isophthalsäure oder Terephthalsäure,

sowie deren Dimere, Trimere, Tetramere, Pentamere oder Hexamere, Monomere oder Oligomere eines $C_7$ - bis $C_{20}$ -, vorzugsweise $C_8$ - bis $C_{18}$ - arylaliphatischen Diamins, wie m- oder p-Xylylendiamin, mit einer $C_9$ - bis $C_{20}$ -, vorzugsweise $C_9$ - bis $C_{18}$ - arylaliphatischen Dicarbonsäure oder deren Derivate, beispielsweise Chloride, wie o-, m- oder p-Phenylendiessigsäure,

sowie deren Dimere, Trimere, Tetramere, Pentamere oder Hexamere,
sowie Homopolymere, Copolymere, Mischungen und Pfropfungen solcher Ausgangsmonomere oder Ausgangsoligomere in Betracht.

In einer bevorzugten Ausführungsform setzt man als Lactam Caprolactam, als Diamin Tetramethylendiamin, Hexamethylendiamin oder deren Gemische und als Dicarbonsäure Adipinsäure, Sebacinsäure, Dodecandisäure, Terephthalsäure, Isophthalsäure oder deren Gemische ein. Besonders bevorzugt ist als Lactam Caprolactam, als Diamin Hexamethylendiamin und als Dicarbonsäure Adipinsäure oder Terephthalsäure oder deren Gemische.

Besonders bevorzugt sind dabei solche Ausgangsmonomere oder Ausgangsoligomere, die bei der Polymerisation zu den Polyamiden Nylon 6, Nylon 6,6, Nylon 4,6, Nylon 6,10, Nylon 6,12, Nylon 7, Nylon 11, Nylon 12 oder den Aramiden Poly-metaphenylen-isophthalamid oder Poly-paraphenylen-terephthalamid, insbesondere zu Nylon 6 oder Nylon 66, führen.

In einer bevorzugten Ausführungsform kann man bei der Herstellung der Polyamide mit einem oder mehreren Kettenreglern einsetzen. Als Kettenregler kommen vorteilhaft Verbindungen in Betracht, die eine oder mehrere, wie zwei, drei oder vier, im Falle von Systemen in Form von Fasern bevorzugt zwei, bei der Polyamidbildung reaktive Amino-Gruppen oder eine oder mehrere, wie zwei, drei oder vier, im Falle von Systemen in Form von Fasern bevorzugt zwei. bei der Polyamidbildung reaktive Carboxyl-Gruppen aufweisen.

Im ersten Fall erhält man Polyamide, bei denen die zur Herstellung des Polyamids eingesetzten Monomeren eine höhere Zahl an zur Bildung der Polymerkette eingesetzten Amin-Gruppen oder deren Äquivalente als zur Bildung der Polymerkette eingesetzte Carbonsäure-Gruppen oder deren Äquivalente aufweisen.

Im zweiten Fall erhält man Polyamide, bei denen die zur Herstellung des Polyamids eingesetzten Monomeren eine höhere Zahl an zur Bildung der Polymerkette eingesetzten Carbonsäure-Gruppen oder deren Äquivalente als zur Bildung der Polymerkette eingesetzte Amin-Gruppen oder deren Äquivalente aufweisen.

Als Kettenregler können vorteilhaft Monocarbonsäuren, wie Alkancarbonsäuren, beispielsweise Essigsäure, Proprionsäure, wie Benzol- oder Naphthalinmonocarbonsäure, beispielsweise Benzoesäure, Dicarbonsäuren, wie $C_4$-$C_{10}$-Alkandicarbonsäure, beispielsweise Adipinsäure, Azelainsäure, Sebacinsäure, Dodecandisäure, $C_5$-$C_8$-Cycloalkandicarbonsäuren, beispielsweise Cyclohexan-1,4-dicarbonsäure, Benzol- oder Naphthalindicarbonsäure, beispielsweise Terephthalsäure, Isophthalsäure, Naphthalin-2,6-dicarbonsäure, $C_2$ - bis $C_{20}$ -, vorzugsweise $C_2$ - bis $C_{12}$ - Alkylamine, wie Cyclohexylamin, $C_6$ - bis $C_{20}$ -, vorzugsweise $C_6$ - bis $C_{10}$ - aromatische Monoamine, wie Anilin, oder $C_7$ - bis $C_{20}$ -, vorzugsweise $C_8$ - bis $C_{18}$ - arylaliphatische Monoamine, wie Benzylamin, Diamine, wie $C_4$-$C_{10}$-Alkandiamine, beispielsweise Hexamethylendiamin eingesetzt werden.

Die Kettenregler können unsubstituiert oder substituiert sein, beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, oder Halogene, wie Fluor, Chlor, Brom. Beispiele für substituierte Kettenregler sind Sulfoisophthalsäure, deren Alkali- oder Erdalkalisalze, wie Lithium-, Natrium oder Kalium-Salze, Sulfoisophthalsäureester, beispielsweise mit $C_1$-$C_{16}$-Alkanolen, oder Sufoisophthalsäuremono- oder diamide, insbesondere mit zur Bildung von Polyamiden geeigneten, mindestens eine Amingruppe tragenden Monomeren, wie Hexamtehylendiamin oder 6-Aminoicapronsäure.

Vorteilhaft kann man einen Kettenregler in Mengen von mindestens 0,01 Mol-%, vorzugsweise mindestens 0,05 Mol-%, insbesondere mindestens 0,2 Mol-%, bezogen auf 1 Mol Säureamidgruppen des Polyamids, einsetzen. Vorteilhaft kann man einen Kettenregler in Mengen von höchstens 1,0 Mol-%, vorzugsweise höchstens 0,6 Mol-%, insbesondere höchstens 0,5 Mol-%, bezogen auf 1 Mol Säureamidgruppen des Polyamids, einsetzen.

Erfindungsgemäß enthält das Polyamid gemäß Komponente a) ein an die Polymerkette chemisch gebundenes sterisch gehindertes Piperidin-Derivat. Das Polyamid kann dabei als sterisch gehindertes Piperidin-Derivat auch Gemische solcher sterisch gehinderter Piperidin-Derivat enthalten.

Bevorzugt kommen als sterisch gehindertes Piperidin-Derivate solche der Formel

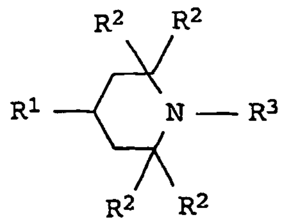

wobei

- $R^1$ für eine funktionelle Gruppe steht, die zur Amidbildung gegenüber der Polymerkette des Polyamids fähig ist, vorzugsweise eine Gruppe $-(NH)R^5$, wobei $R^5$ für Wasserstoff oder $C_1$-$C_8$-Alkyl steht, oder eine Carboxylgruppe oder ein Carboxylderivat oder eine Gruppe $-(CH_2)_x(NH)R^5$, wobei X für 1 bis 6 steht und R5 für Wasserstoff oder $C_1$-$C_8$-Alkyl steht, oder eine Gruppe $-(CH_2)_yCOOH$, wobei Y für 1 bis 6 steht, oder ein $-(CH_2)_yCOOH$ Säurederivat, wobei Y für 1 bis 6 steht, insbesondere für eine Gruppe $-NH_2$ steht,
- $R^2$ für eine Alkylgruppe steht, vorzugsweise eine C1-C4-Alkylgruppe, wie Methyl, Ethyl, n-Propyl, i-Propyl, n-Butyl, i-Butyl, s-Butyl, s-Butyl, insbesondere eine Methylgruppe,
- $R^3$ für Wasserstoff, $C_1$-$C_4$-Alkyl oder O-$R^4$ steht, wobei $R^4$ für Wasserstoff oder $C_1$-$C_7$ Alkyl steht, insbesondere $R^3$ für Wasserstoff steht,

in Betracht.

In solchen Verbindungen reagieren üblicherweise die tertiären, insbesondere sekundären Aminogruppen der Piperidin-Ringsysteme dabei wegen sterischer Hinderung nicht.

Besonders bevorzugt als sterisch gehindertes Piperidin-Derivat ist 4-Amino-2,2,6,6-Tetramethylpiperidin.

Vorteilhaft kann man das sterisch gehinderte Piperidin-Derivat in Mengen von mindestens 0,01 Mol-%, vorzugsweise mindestens 0,05 Mol-%, insbesondere mindestens 0,1 Mol-%, bezogen auf 1 Mol Säureamidgruppen des Polyamids, einsetzen.

Vorteilhaft kann man Verbindung (II) in Mengen von höchstens 0,8 Mol-%, vorzugsweise höchstens 0,6 Mol-%, insbesondere höchstens 0,4 Mol-%, bezogen auf 1 Mol Säureamidgruppen des Polyamids, einsetzen.

In einer bevorzugten Ausgestaltung wird die Polymerisation bzw. Polykondensation nach dem erfindungsgemäßen Verfahren in Gegenwart mindestens eines Pigments durchgeführt. Bevorzugte Pigmente sind Titandioxid, wobei Titandioxid vorzugsweise in der Anatas-Modifikation vorliegt, oder farbgebende Verbindungen anorganischer oder organischer Natur. Die Pigmente werden vorzugsweise in einer Menge von 0 bis 5 Gewichtsteile, insbesondere 0,02 bis 2 Gewichtsteile, jeweils bezogen auf 100 Gewichtsteile Polyamid, zugegeben. Die Pigmente können dem Reaktor mit den Ausgangsstoffen oder getrennt davon zugeführt werden.

Vorteilhaft als Komponente a) einsetzbare Polyamide, die ein an die Polymerkette chemisch gebundenes sterisch gehindertes Piperidin-Derivat enthalten, sowie Verfahren zur Herstellung solcher Polyamide sind beispielsweise in WO 95/28443, WO 97/05189, WO 98/50610, WO 99/46323, WO 99/48949, EP-A-822 275, EP-A-843 696 und den deutschen Anmeldungen 10030515.6, 10030512.1 und 10058291.5 beschrieben.

Erfindungsgemäß versetzt man Komponente a) mit einem 2,6-Diaminopyridin-Derivat als Komponente b).

Vorteilhaft kommt als Komponente b) ein 2,6-Diaminopyridin-Derivat der Formel

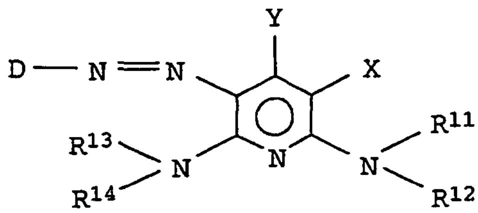

in Betracht.

$R^{11}$, $R^{13}$ können unabhängig voneinander Wasserstoff oder eine aliphatische Gruppe, cycloaliphatische Gruppe, aromatisch-aliphatische Gruppe, oder aromatische Gruppe sein.

Als aliphatische Gruppe kommt vorteilhaft eine $C_1$-$C_8$-Alkylgruppe, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl in Betracht. Diese Gruppe kann unsubstituiert oder substituiert sein, beispielsweise durch Halogen, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, oder unterbrochen sein durch Heteroatome, wie Sauerstoff, Stickstoff oder Schwefel.

Als cycloaliphatische Gruppe kommt vorteilhaft Cyclopentyl, Cyclohexyl Cycloheptyl, Cylooctyl in Betracht. Diese Gruppe kann unsubstituiert oder substituiert sein, beispielsweise durch Halogen, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, oder unterbrochen sein durch Heteroatome, wie Sauerstoff, Stickstoff oder Schwefel.

Als aromatisch-aliphatische Gruppe kommt vorteilhaft eine $C_1$-$C_8$-Alkylgruppe, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl in Betracht, die eine aromatische Gruppe trägt. Im Sinne der vorliegenden Erfindung wird unter einer aromatischen Gruppe ein vollkonjugiertes Cyclopolyen

mit (4n + 2) pi-Elektronen, mit n eine natürliche Zahl einschließlich null, wie 0, 1, 2, oder 3, verstanden. Das Cyclopolyen kann dabei aus einem reinen Kohlenstoffgerüst aufgebaut sein oder ein oder mehrere, wie 2, 3 oder 4 Heteroatome, beispielsweise Sauerstoff, Stickstoff oder Schwefel, beinhalten. Die aromatischen Gruppen können unsubstituiert oder substituiert sein, beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom, oder eine weitere aromatische Gruppe. Vorteilhafte Beispiele für ein Grundgerüst einer aromatischen Gruppe sind Benzol, Naphthalin, Diphenyl, Azobenzol, Thiophen, Benzthiazol, Benzisothiazol, Isothiazol, Thiazol, Thiadiazol, Triazol, Benztriazol, Indazol, Pyrazol und Anthrachinon.

Als aromatische Gruppe kommt vorteilhaft ein vollkonjugiertes Cyclopolyen mit (4n + 2) pi-Elektronen, mit n eine natürliche Zahl einschließlich null, wie 0, 1, 2, oder 3, in Betracht. Das Cyclopolyen kann dabei aus einem reinen Kohlenstoffgerüst aufgebaut sein oder ein oder mehrere, wie 2, 3 oder 4 Heteroatome, beispielsweise Sauerstoff, Stickstoff oder Schwefel, beinhalten. Die aromatischen Gruppen können unsubstituiert oder substituiert sein, beispielsweise durch beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom, oder eine weitere aromatische Gruppe. Vorteilhafte Beispiele für ein Grundgerüst einer aromatischen Gruppe sind Benzol, Naphthalin, Diphenyl, Azobenzol, Thiophen, Benzthiazol, Benzisothiazol, Isothiazol, Thiazol, Thiadiazol, Triazol, Benztriazol, Indazol, Pyrazol und Anthrachinon.

$R^{12}$, $R^{14}$ können unabhängig voneinander Wasserstoff oder eine aliphatische Gruppe, cycloaliphatische Gruppe, aromatisch-aliphatische Gruppe, oder aromatische Gruppe sein. Bevorzugt können $R^2$, $R^4$ unabhängig voneinander eine aliphatische Gruppe, cycloaliphatische Gruppe, aromatisch-aliphatische Gruppe, oder aromatische Gruppe sein.

Als aliphatische Gruppe kommt vorteilhaft eine $C_1$-$C_8$-Alkylgruppe, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl in Betracht. Diese Gruppe kann unsubstituiert oder substituiert sein, beispielsweise durch Halogen, OH, =O $C_1$-$C_8$-Alkoxy, COOH, $C_2$-$C_6$-Carbalkoxy, $C_1$-$C_{10}$-Acyloxy, oder $C_1$-$C_8$-Alkylamino, oder unterbrochen sein durch Heteroatome, wie Sauerstoff, Stickstoff oder Schwefel.

Als cycloaliphatische Gruppe kommt vorteilhaft Cyclopentyl, Cyclohexyl Cycloheptyl, Cylooctyl in Betracht. Diese Gruppe kann unsubstituiert oder substituiert sein, beispielsweise durch Halogen, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, oder unterbrochen sein durch Heteroatome, wie Sauerstoff, Stickstoff oder Schwefel.

Als aromatisch-aliphatische Gruppe kommt vorteilhaft eine $C_1$-$C_8$-Alkylgruppe, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl in Betracht, die eine aromatische Gruppe trägt. Als aromatische Gruppe kann ein vollkonjugiertes Cyclopolyen mit (4n + 2) pi-Elektronen, mit n eine natürliche Zahl einschließlich null, wie 0, 1, 2, oder 3, eingesetzt werden. Das Cyclopolyen kann dabei aus einem reinen Kohlenstoffgerüst aufgebaut sein oder ein oder mehrere, wie 2, 3 oder 4 Heteroatome, beispielsweise Sauerstoff, Stickstoff oder Schwefel, beinhalten. Die aromatischen Gruppen können unsubstituiert oder substituiert sein, beispielsweise durch beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom, oder eine weitere aromatische Gruppe, die ihrerseits unsubstituiert oder substituiert sein kann, beispielsweise durch beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkyolamino, Sulfonsäure oder deren Salze, wie Alkali- oder Erdalkalisalze, Cyano, Halogene, wie Fluor, Chlor, Brom. Vorteilhafte Beispiele für ein Grundgerüst einer aromatischen Gruppe sind Benzol, Naphthalin, Diphenyl, Azobenzol, Thiophen, Benzthiazol, Benzisothiazol, Isothiazol, Thiazol, Thiadiazol, Triazol, Benztriazol, Indazol, Pyrazol und Anthrachinon.

Als aromatische Gruppe kommt vorteilhaft ein vollkonjugiertes Cyclopolyen mit (4n + 2) pi-Elektronen, mit n eine natürliche Zahl einschließlich null, wie 0, 1, 2, oder 3, in Betracht. Das Cyclopolyen kann dabei aus einem reinen Kohlenstoffgerüst aufgebaut sein oder ein oder mehrere, wie 2, 3 oder 4 Heteroatome, beispielsweise Sauerstoff, Stickstoff oder Schwefel, beinhalten.

Die aromatischen Gruppen können unsubstituiert oder substituiert sein, beispielsweise durch beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom, oder eine weitere aromatische Gruppe, die ihrerseits unsubstituiert oder substituiert sein kann, beispielsweise durch beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O $C_1$-$C_8$-Alkoxy, COOH, $C_2$-$C_6$-Carbalkoxy, $C_1$-$C_{10}$-Acyloxy, oder $C_1$-$C_8$-Alkyolamino, Sulfonsäure oder deren Salze, wie Alkali- oder

Erdalkalisalze, Cyano, Halogene, wie Fluor, Chlor, Brom. Vorteilhafte Beispiele für ein Grundgerüst einer aromatischen Gruppe sind Benzol, Naphthalin, Diphenyl, Azobenzol, Thiophen, Benzthiazol, Benzisothiazol, Isothiazol, Thiazol, Thiadiazol, Triazol, Benztriazol, Indazol, Pyrazol und Anthrachinon.

Die Reste $R^{11}$ und $R^{12}$ oder $R^{13}$ und $R^{14}$ können mit dem jeweiligen Stickstoff ein Ringsystem bilden, wie Pyrrolidin, Piperidin, Morpholin oder (N-Alkyl)-piperazin, wie N-Methyl-piperazin.

In einer bevorzugten Ausführungsform kommen als Reste $R^{11}$ und $R^{13}$ Wasserstoff und als Reste $R^{12}$ und $R^{14}$ unabhängig voneinander 2-Hydroxyethyl, 3-Hydroxy-n-propyl, 2-Methoxy-ethyl, 3-Methoxy-n-propyl, 2-Phenyl-ethyl, 2-(p-Phenylsulfonsäure)-ethyl, 2-(p-Phenyl-Natrium-sulfonat)-ethyl, Phenyl in Betracht.

Als Rest X kommt vorteilhaft eine Cyano-, Carbonamid- oder Carbonestergruppe in Betracht.

Die Carbonamid- oder Carbonestergruppe kann unsubstituiert oder substituiert sein, beispielsweise durch eine aliphatische Gruppe, cycloaliphatische Gruppe, aromatisch-aliphatische Gruppe oder aromatische Gruppe.

Als aliphatische Gruppe kommt vorteilhaft eine $C_1$-$C_8$-Alkylgruppe, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl in Betracht. Diese Gruppe kann unsubstituiert oder substituiert sein, beispielsweise durch Halogen, OH, =O, $C_1$-$C_8$-Alkoxy, COOH, $C_2$-$C_6$-Carbalkoxy, $C_1$-$C_{10}$-Acyloxy, oder $C_2$-$C_8$-Alkylamino, oder unterbrochen sein durch Heteroatome, wie Sauerstoff, Stickstoff oder Schwefel.

Als cycloaliphatische Gruppe kommt vorteilhaft Cyclopentyl, Cyclohexyl Cycloheptyl, Cylooctyl in Betracht. Diese Gruppe kann unsubstituiert oder substituiert sein, beispielsweise durch Halogen, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, oder unterbrochen sein durch Heteroatome, wie Sauerstoff, Stickstoff oder Schwefel.

Als aromatisch-aliphatische Gruppe kommt vorteilhaft eine $C_1$-$C_8$-Alkylgruppe, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl in Betracht, die eine aromatische Gruppe trägt. Als aromatische Gruppe kann ein vollkonjugiertes Cyclopolyen mit (4n + 2) pi-Elektronen, mit n eine natürliche Zahl einschließlich null, wie 0, 1, 2, oder 3, eingesetzt werden. Das Cyclopolyen kann dabei aus einem reinen Kohlenstoffgerüst aufgebaut sein oder ein oder mehrere, wie 2, 3 oder 4 Heteroatome, beispielsweise Sauerstoff, Stickstoff oder Schwefel, beinhalten. Die aromatischen Gruppen können unsubstituiert oder substituiert sein, beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom, oder eine weitere aromatische Gruppe, die ihrerseits unsubstituiert oder substituiert sein kann, beispielsweise durch beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom. Vorteilhafte Beispiele für ein Grundgerüst einer aromatischen Gruppe sind Benzol, Naphthalin, Diphenyl, Azobenzol, Thiophen, Benzthiazol, Benzisothiazol, Isothiazol, Thiazol, Thiadiazol, Triazol, Benztriazol, Indazol, Pyrazol und Anthrachinon.

Als aromatische Gruppe kommt vorteilhaft ein vollkonjugiertes Cyclopolyen mit (4n + 2) pi-Elektronen, mit n eine natürliche Zahl einschließlich null, wie 0, 1, 2, oder 3, in Betracht. Das Cyclopolyen kann dabei aus einem reinen Kohlenstoffgerüst aufgebaut sein oder ein oder mehrere, wie 2, 3 oder 4 Heteroatome, beispielsweise Sauerstoff, Stickstoff oder Schwefel, beinhalten. Die aromatischen Gruppen können unsubstituiert oder substituiert sein, beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom, oder eine weitere aromatische Gruppe, die ihrerseits unsubstituiert oder substituiert sein kann, beispielsweise durch beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom. Vorteilhafte Beispiele für ein Grundgerüst einer aromatischen Gruppe sind Benzol, Naphthalin, Diphenyl, Azobenzol, Thiophen, Benzthiazol, Benzisothiazol, Isothiazol, Thiazol, Thiadiazol, Triazol, Benztriazol, Indazol, Pyrazol und Anthrachinon.

In einer bevorzugten Ausführungsform kommt als Rest X die Cyanogruppe in Betracht.

Der Rest Y kann Wasserstoff oder eine aliphatische Gruppe, cycloaliphatische Gruppe, aromatisch-aliphatische Gruppe, oder aromatische Gruppe sein.

Als aliphatische Gruppe kommt vorteilhaft eine $C_1$-$C_8$-Alkylgruppe, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl in Betracht. Diese Gruppe kann unsubstituiert oder substituiert sein, beispielsweise durch Halogen, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Halogene, wie Fluor, Chlor, Brom, oder unterbrochen sein durch Heteroatome, wie Sauerstoff, Stickstoff oder Schwefel.

Als cycloaliphatische Gruppe kommt vorteilhaft Cyclopentyl, Cyclohexyl Cycloheptyl, Cylooctyl in Betracht.

Diese Gruppe kann unsubstituiert oder substituiert sein, beispielsweise durch Halogen, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, oder unterbrochen sein durch Heteroatome, wie Sauerstoff, Stickstoff oder Schwefel.

Als aromatisch-aliphatische Gruppe kommt vorteilhaft eine $C_1$-$C_8$-Alkylgruppe, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl in Betracht, die eine aromatische Gruppe trägt. Als aromatische Gruppe kann ein vollkonjugiertes Cyclopolyen mit (4n + 2) pi-Elektronen, mit n eine natürliche Zahl einschließlich null, wie 0, 1, 2, oder 3, eingesetzt werden. Das Cyclopolyen kann dabei aus einem reinen Kohlenstoffgerüst aufgebaut sein oder ein oder mehrere, wie 2, 3 oder 4 Heteroatome, beispielsweise Sauerstoff, Stickstoff oder Schwefel, beinhalten. Die aromatischen Gruppen können unsubstituiert oder substituiert sein, beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom, oder eine weitere aromatische Gruppe, die ihrerseits unsubstituiert oder substituiert sein kann, beispielsweise durch beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom. Vorteilhafte Beispiele für ein Grundgerüst einer aromatischen Gruppe sind Benzol, Naphthalin, Diphenyl, Azobenzol, Thiophen, Benzthiazol, Benzisothiazol, Isothiazol, Thiazol, Thiadiazol, Triazol, Benztriazol, Indazol, Pyrazol und Anthrachinon.

Als aromatische Gruppe kommt vorteilhaft ein vollkonjugiertes Cyclopolyen mit (4n + 2) pi-Elektronen, mit n eine natürliche Zahl einschließlich null, wie 0, 1, 2, oder 3, in Betracht. Das Cyclopolyen kann dabei aus einem reinen Kohlenstoffgerüst aufgebaut sein oder ein oder mehrere, wie 2, 3 oder 4 Heteroatome, beispielsweise Sauerstoff, Stickstoff oder Schwefel, beinhalten. Die aromatischen Gruppen können unsubstituiert oder substituiert sein, beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom, oder eine weitere aromatische Gruppe, die ihrerseits unsubstituiert oder substituiert sein kann, beispielsweise durch beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom. Vorteilhafte Beispiele für ein Grundgerüst einer aromatischen Gruppe sind Benzol, Naphthalin, Diphenyl, Azobenzol, Thiophen, Benzthiazol, Benzisothiazol, Isothiazol, Thiazol, Thiadiazol, Triazol, Benztriazol, Indazol, Pyrazol und Anthrachinon.

In einer bevorzugten Ausführungsform kommt als Rest Y die Methylgruppe in Betracht.

Als Rest D kommt eine aromatische Gruppe in Betracht.

Als aromatische Gruppe kommt vorteilhaft ein vollkonjugiertes Cyclopolyen mit (4n + 2) pi-Elektronen, mit n eine natürliche Zahl einschließlich null, wie 0, 1, 2, oder 3, in Betracht. Das Cyclopolyen kann dabei aus einem reinen Kohlenstoffgerüst aufgebaut sein oder ein oder mehrere, wie 2, 3 oder 4 Heteroatome, beispielsweise Sauerstoff, Stickstoff oder Schwefel, beinhalten. Die aromatischen Gruppen können unsubstituiert oder substituiert sein, beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom oder eine weitere aromatische Gruppe, die ihrerseits unsubstituiert oder substituiert sein kann, beispielsweise durch beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, -Sulfonsäure oder deren Salze, wie Alkali- oder Erdalkalisalze, Cyano, Halogene, wie Fluor, Chlor, Brom.

Vorteilhafte Beispiele für ein Grundgerüst einer aromatischen Gruppe sind Benzol, Naphthalin, Diphenyl, Azobenzol, Thiophen, Benzthiazol, Benzisothiazol, Isothiazol, Thiazol, Thiadiazol, Triazol, Benztriazol, Indazol, Pyrazol und Anthrachinon.

In einer bevorzugten Ausführungsform kommt als Grundgerüst von Rest D Benzol, Naphthalin, Diphenyl, Azobenzol, Thiophen, Benzthiazol, Benzisothiazol, Isothiazol, Thiazol, Thiadiazol, Triazol, Benztriazol, Indazol, Pyrazol und Anthrachinon, insbesondere Benzol, in Betracht, wobei diese Gruppen einfach oder mehrfach, wie zweifach oder dreifach substituiert sind, beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom oder eine weitere aromatische Gruppe, die ihrerseits unsubstituiert oder substituiert sein kann, beispielsweise durch aliphatische Gruppen, vorzugsweise $C_1$-$C_8$-Alkylgruppen, wie Methyl, Ethyl,

i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom, oder besonders vorteilhaft durch eine über eine Azogruppe verbundene aromatische Gruppe, wie Benzol, Naphthalin, Diphenyl, Azobenzol, Thiophen, Benzthiazol, Benzisothiazol, Isothiazol, Thiazol, Thiadiazol, Triazol, Benztriazol, Indazol, Pyrazol und Anthrachinon, insbesondere Benzol, wobei diese Gruppe einfach oder mehrfachwie aliphatische Gruppe, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom oder eine weitere aromatische Gruppe, die ihrerseits unsubstituiert oder substituiert sein kann, beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, Halogene, wie Fluor, Chlor, Brom, tragen kann.

In einer bevorzugten Ausführungsform kommt als 2,6-Diaminopyridin-Derivat eine saure Verbindung in Betracht. Im Sinne der vorliegenden Erfindung wir hierunter eine Verbindung verstanden, die in wäßriger Lösung einen pH-Wert von kleiner als 7 aufweist, oder ein Salz einer solchen Verbindung, beispielsweise Natrium- oder Kalium-Salz, oder deren Gemische. Die saure Eigenschaft des 2,6-Diaminopyridin-Derivats kann vorzugsweise erhalten werden, indem die Verbindung eine oder mehrere, wie 2, 3, oder 4 Sulfonsäuregruppen oder deren Salze, wie Natrium- oder Kaliumsalze, oder Gemische hiervon enthält.

Als Komponente b) geeignete Verbindungen sind beispielsweise aus BE-A-793316, BE-A-793317, BE-A-811640, DE-A-19623411, DE-A-19706245, DE-A-2062717, DE-A-2156545, DE-A-2211663, DE-A-2216570, DE-A-2222099, DE-A-2222873, DE-A-2234621, DE-A-2263458, DE-A-2306673, DE-A-2308663, DE-A-2315637, DE-A-2361371, DE-A-2362581, DE-A-2404854, DE-A-2419763, DE-A-2507863, DE-A-2640576, DE-A-2701610, DE-A-2718619, DE-A-2718620, DE-A-2718883, DE-A-2832020, DE-A-2916319, DE-A-3025904, DE-A-3111937, DE-A-3227134, DE-A-3227253, DE-A-3235640, DE-A-3330155, DE-A-3615093, DE-A-3634393, DE-A-3707715, DE-A-3723884, DE-A-3820313, DE-A-4207745, DE-A-4215535, DE-A-4321422, DE-A-4329915, EP-A-474600, EP-A-512548, EP-A-581730, EP-A-581731, EP-A-581732, EP-A-601439, JP-A-59075952, JP-A-59140265, JP-A-59168193, JP-A-61075885, JP-A-61151269, JP-A-63085187, JP-A-05096869, JP-A-05124364, NL-A-7303378, NL-A-7402043, NL-A-7502419, bekannt.

Als Komponente b) kann eine einzelne Verbindung oder ein Gemisch mehrere, wie zwei, drei oder vier Verbindungen eingesetzt werden.

Als Komponente b) können farbige oder farblose Verbindungen eingesetzt werden. Setzt man als Komponente b) farbige Verbindungen ein, so kann die gewünschte Farbe durch eine Verbindung oder durch mehrere Verbindungen, wie zwei, drei oder vier, insbesondere drei, vorzugsweise solche unterschiedlicher Farbe erzielt werden.

Erfindungsgemäß erhält man das System, indem man Komponente a) mit Komponente b) versetzt.

Dabei kommt ein System in Betracht, bei dem Komponente a) und Komponente b) vermischt vorliegt. Ebenso kommt ein System in Betracht, bei dem Komponente b) sich auf der Oberfläche von Komponente a) befindet.

Zur Herstellung eines Systems, bei der Komponente a) und Komponente b) vermischt vorliegen, kann Komponente b) in Komponente a) nach an sich bekannten Verfahren, beispielsweise durch Extrusion, wie Schmelzextrusion, eingearbeitet werden. Aus dem System können dann nach an sich bekannten Verfahren geometrische Gebilde, wie Fäden, beispielsweise durch Verspinnen aus der Schmelze, Folien, beispielsweise nach dem Blasziehverfahren, oder Formkörper, beispielsweise durch Spritzguß, erhalten werden.

Zur Herstellung eines Systems, bei der Komponente b) sich auf der Oberfläche von Komponente a) befindet, kommt zunächst die Herstellung geometrischer Gebilde, wie Fäden, beispielsweise durch Verspinnen aus der Schmelze, Folien, beispielsweise nach dem Blasziehverfahren, oder Formkörper, beispielsweise durch Spritzguß, mit anschließendem Aufbringen von Komponente b), vorzugsweise durch Aufbringen einer Lösung von Komponente b), insbesondere in Wasser oder einem organischen Lösungsmittel, beispielsweise durch Eintauchen des geometrischen Gebildes in die Lösung, in Betracht.

Bei dem Auftragen von Komponente b) auf ein geometrisches Gebilde aus Komponente a) ist es möglich, daß ein Teil von Komponente b) in das geometrische Gebilde aus Komponente a) hineindiffundiert.

Nach dem Aufbringen von Komponente b) auf das geometrische Gebilde aus Komponente a) kann eine Hitzebehandlung in Gegenwart oder Abwesenheit von Wasserdampf eine Stabilisierung der Raumform des Systems bewirken.

## Beispiele

Die relative Lösungsviskosität des Polyamids wurde in 96%-Schwefelsäure gemäß DIN 51562-1 bis -4 gemessen.

Dazu wurden 500 mg der Probe in einem 50 ml-Eichkolben eingewogen und mit 96 Gew.-%iger Schwefelsäure aufgefüllt. Die Probe wurde homogen aufgelöst.

In einem Ubbelohde Viscosimeter No. II wurde bei 25°C ± 0,05°C die Auslaufzeit zwischen der oberen und der unteren Kalibriermarke bestimmt. Die Messungen wurden wiederholt, bis drei aufeinanderfolgende Messungen in einem Bereich von 0,3 Sekunden lagen. In gleicher Weise wurde die Auslaufzeit für das Lösungsmittel bestimmt. Die relative Viskosität (RV) wurde bestimmt gemäß

$$RV = T / T_0$$

mit:

T: Auslaufzeit der Lösung [Sekunden]
$T_0$ : Auslaufzeit des Lösungsmittels [Sekunden]

Die Zahl der Aminoendgruppen wurde bestimmt durch Titration einer Lösung von 1 g Polyamid in 25 ml einer Mischung aus Phenol und Methanol (Gew.-Verhältnis 7:3) mit einer Lösung von Perchlorsäure in Methanol/Ethylenglycol (1,72 ml einer 70 gew.-%igen wäßrigen Lösung, 100 ml Methanol, Rest zu 1000 ml Ethylenglycol) gegen einer Mischung von 0,1 g Benzylorange in 100 ml Methanol und 0,05 g Methylenblau in 50 ml Methanol als Indikator. Die Aminoendgruppenzahl wurde bestimmt in Milliäquivalente Aminoendgruppen pro kg Polyamid.

Als erfindungsgemäßes Polyamid 1 wurde ein Polyamid 6 eingesetzt, das als chemisch an die Polymerkette gebundenes sterisch gehindertes Piperidin-Derivat 0,12 Gew.-% (bezogen auf Polyamid) 4-Amino-2,2,6,6-tetramethylpiperidin aufwies, mit einer relativen Viskosität von 2,77 und einer Aminoendgruppenzahl von 34 meq /kg.

Als Vergleichspolyamid 1 wurde ein Polyamid 6.6 eingesetzt mit einer relativen Viskosität von 2,80 und einer Aminoendgruppenzahl von 44 meq / kg.
Polyamid 1 und Vergleichspolyamid 1 enthielten 0,3 Gew.-%, bezogen auf Polyamid, Titandioxid.
Polyamid 1 und Vergleichspolyamid 1 wurden in Form von Stapelfasern (runder Querschnitt, Titer 60% 6,7 dtex / 40 % 13 dtex Polyamid 1, 60% 6,7 dtex / 40 % 11 dtex Vergleichspolyamid 1) Umwindegarn, Nm 8, zu einem Velour-Teppich, mit Teilung 1/10", 54 Stiche/10 cm, 260 g/m2 Poleinsatzgewicht verarbeitet.

Als erfindungsgemäßes 2,6-Diaminopyridin-Derivat 1 wurde Acidol Rot GL-XN (Nylonmin C-GL) (BASF Aktiengesellschaft) der Formel

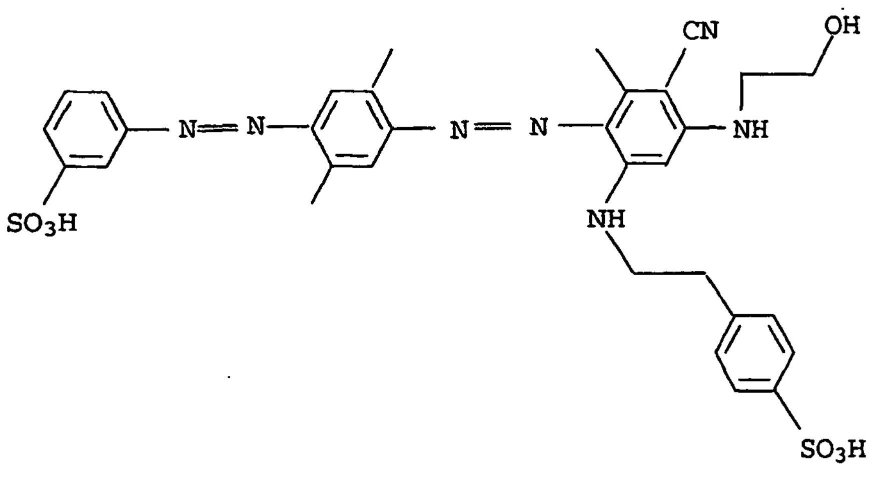

eingesetzt.

Als roter Vergleichsfarbstoff 1 wurde Telonrot FR-L (Bayer AG), C.I. Acid Red 337, der Formel

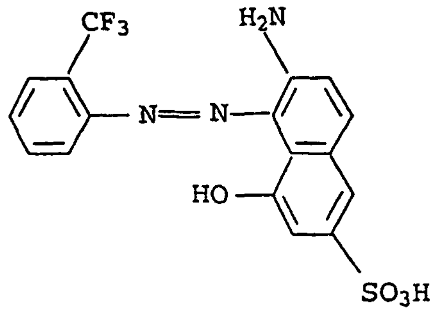

eingesetzt.

Als Trichromie wurden diese beiden roten Farbstoffe zusammen mit den nicht-erfindungsgemäßen Farbstoffen Telonblau CGL und Telongelb RLN im Falle der Trichromie 1 und Tectilon Blau 4R und Acidol Brillant Gelb M3GL im Falle der Trichromie 2 zusammen eingesetzt unter Erhalt einer Trichromie 1 bzw. Trichromie 2 und einer Vergleichs-Trichromie 1 zur Erzielung eines dunkelgrauen Farbtons auf Polyamid 1 und Vergleichs-Polyamid 1.

Die Färbung erfolgte in einem Laborautoklav bei einer Temperatur von 90°C so, daß der gleiche visuelle Farbeindruck (gleicher Graufarbton) bei den Kombinationen Polyamid 1 / Trichromie 1 bzw. 2, Vergleichs-Polyamid 1 / Trichromie 1 bzw. 2, Polyamid 1 / Vergleichs-Trichromie 1 und Vergleichs-Polyamid 1 / Vergleichs-Trichromie 1 entstand.

Die Teppiche wurden drei Zyklen des Tests gemäß DIN 75202 (Entwurf Mai 1996), Expositionsbedingung A gemäß Tabelle 2 dieser DIN, unterworfen und die Veränderungen als CIELAB Delta L, CIELAB Delta E (CIELAB gemäß Ullmann's Encyclopedia of Industrial Chemistry, 5. Ed., Vol. A9, VCH Verlagsgesellschaft, Weinheim, Deutschland, 1987, Seite 102 - 104, Abschnitte 3.4. und 3.5.) und Graumaßstab gemäß genannter DIN 75202, Punkt 5.2.5 nach jedem Zyklus ermittelt.

Es wurden nach den Tests folgende Werte erhalten:

CIELAB Delta L

Je kleiner die CIELAB Delta L-Werte sind, desto geringer ist das Verschießen des Teppichs.

Tabelle 1

| | | CIELAB Delta L | | |
|---|---|---|---|---|
| Polyamid | Trichromie | 1.Zyklus | 2.Zyklus | 3.Zyklus |
| Polyamid 1 | Trichromie 1 | 1,4 | 4,6 | 10,1 |
| Polyamid 1 | Trichromie 2 | 2,9 | 5,9 | 8,8 |
| Polyamid 1 | Vergleichs-Trichomie 1 | 7,0 | 10,2 | 12,7 |
| Vergleichs-Polyamid 1 | Trichromie 1 | 5,5 | 13,3 | 21,9 |
| Vergleichs-Polyamid 1 | Trichromie 2 | 5,3 | 11,9 | 19,8 |
| Vergleichs-Polyamid 1 | Vergleichs-Trichomie 1 | 9,3 | 17,1 | 20,7 |

Die besten Werte wurden mit dem erfindungsgemäßen System erzielt.

CIELAB Delta E

Je kleiner die CIELAB Delta E-Werte sind, desto geringer ist das Verschießen des Teppichs.

Tabelle 2

| | | CIELAB Delta E | | |
|---|---|---|---|---|
| Polyamid | Trichromie | 1.Zyklus | 2.Zyklus | 3.Zyklus |
| Polyamid 1 | Trichromie 1 | 2,8 | 5,5 | 10,6 |

Tabelle fortgesetzt

| | | CIELAB Delta E | | |
|---|---|---|---|---|
| Polyamid | Trichromie | 1.Zyklus | 2.Zyklus | 3.Zyklus |
| Polyamid 1 | Trichromie 2 | 3,1 | 5,9 | 8,8 |
| Polyamid 1 | Vergleichs-Trichomie 1 | 12,4 | 17,1 | 19,6 |
| Vergleichs-Polyamid 1 | Trichromie 1 | 6,3 | 14,2 | 22,4 |
| Vergleichs-Polyamid 1 | Trichromie 2 | 6,0 | 12,6 | 20,3 |
| Vergleichs-Polyamid 1 | Vergleichs-Trichomie 1 | 12,6 | 20,2 | 22,8 |

Die besten Werte wurden mit dem erfindungsgemäßen System erzielt.

Graumaßstab

Je höher der Wert des Graumaßstabs ist, desto geringer ist das Verschießen des Teppichs. Der beste Wert ist 5 (gleich bedeutend mit nicht verschossen), der kleinste Wert 1 (gleichbedeutend mit völlig verschossen).

Tabelle 3

| | | Graumaßstab | | |
|---|---|---|---|---|
| Polyamid | Trichromie | 1. Zyklus | 2. Zyklus | 3. Zyklus |
| Polyamid 1 | Trichromie 1 | 3-4 | 2 | 1-2 |
| Polyamid 1 | Trichromie 2 | 3 | 2 | 1-2 |
| Polyamid 1 | Vergleichs-Trichomie 1 | 1 | 1 | 1 |
| Vergleichs-Polyamid 1 | Trichromie 1 | 2 | 1 | 1 |
| Vergleichs-Polyamid 1 | Trichromie 2 | 2 | 1 | 1 |
| Vergleichs-Polyamid 1 | Vergleichs-Trichomie 1 | 1 | 1 | 1 |

Die besten Werte wurden mit dem erfindungsgemäßen System erzielt.

Visuelle Bewertung

Die eingesetzten Teppiche (Polyamid 1 / Trichromie 1 bzw. Trichromie 2, Vergleichs-Polyamid 1 / Trichromie 1 bzw. Trichromie 2, Polyamid 1 / Vergleichs-Trichromie 1 und Vergleichs-Polyamid 1 /Vergleichs-Trichromie 1) wiesen vor dem ersten Zyklus den visuell gleichen dunklen Graufarbton auf.

Bei der Trichromie 2 war der Farbeindruck vor dem ersten Zyklus gleichmäßiger, bei Trichromie 1 war ein leichter Dichroismus zu erkennen, d.h. aufgrund des unterschiedlichen Aufzugs des Rotfarbstoffes im Vergleich zum Blau- und Gelbfarbstoff kam es auf der Teppichoberfläche zu rötlich und grünlich schillernden Flekken.

Die Kombination Vergleichs-Polyamid 1 / Vergleichs-Trichromie 1 zeigte nach dem dritten Zyklus eine deutliche Grünfärbung und deutliche Verblassung.

Die Kombination Polyamid 1 / Vergleichs-Trichromie 1 zeigte nach dem dritten Zyklus eine schwache Grünfärbung und deutliche Verblassung.

Die Kombination Vergleichs-Polyamid 1 / Trichromie 1 bzw. Trichromie 2 zeigten nach dem dritten Zyklus keine Grünfärbung und deutliche Verblassung.

Die Kombination Polyamid 1 / Trichromie 1 bzw. Trichromie 2 zeigte nach dem dritten Zyklus keine Grünfärbung und eine schwache Verblassung.

Die besten visuellen Ergebnisse wurden mit dem erfindungsgemäßen System erzielt.

## Patentansprüche

1. System aus

a) einem Polyamid, das ein an die Polymerkette chemisch gebundenes sterisch gehindertes Piperidin-Derivat enthält, und
b) einem 2,6-Diaminopyridin-Derivat.

**2.** System nach Anspruch 1, wobei man als Piperidin-Derivat ein solches der Formel

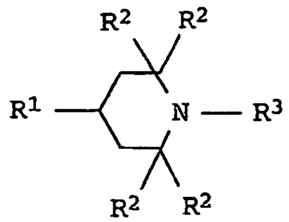

mit

$R^1$ eine funktionelle Gruppe, die zur Amidbildung gegenüber der Polymerkette des Polyamids fähig ist,
$R^2$ eine Alkylgruppe,
$R^3$ Wasserstoff, $C_1$-$C_4$-Alkyl oder O-$R^4$ , wobei $R^4$ für Wasserstoff oder $C_1$-$C_7$-Alkyl steht

einsetzt.

**3.** System nach Anspruch 2, wobei $R^1$ für eine Gruppe -(NH)$R^5$, wobei $R^5$ für Wasserstoff oder $C_1$-$C_8$-Alkyl steht, oder eine Carboxylgruppe oder ein Carboxylderivat oder eine Gruppe -$(CH_2)_x$(NH)$R^5$, wobei X für 1 bis 6 steht und $R^5$ für Wasserstoff oder $C_1$-$C_8$-Alkyl steht, oder eine Gruppe -$(CH_2)_y$COOH, wobei Y für 1 bis 6 steht, oder ein -$(CH_2)_y$COOH Säurederivat, wobei Y für 1 bis 6 steht.

**4.** System nach den Ansprüchen 2 oder 3, wobei $R^1$ für $NH_2$ steht.

**5.** System nach den Ansprüchen 2 bis 4, wobei $R^2$ für Methyl steht.

**6.** System nach den Ansprüchen 1 bis 5, wobei man als Piperidin-Derivat 4-Amino-2,2,6,6-Tetramethylpiperidin einsetzt.

**7.** System nach den Ansprüchen 1 bis 6, wobei man als Komponente b) ein 2,6-Diaminopyridin-Derivat der Formel

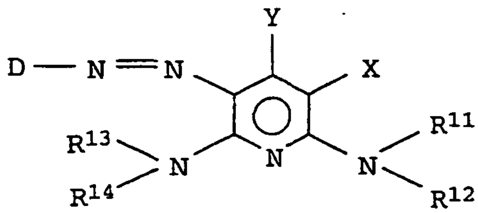

mit
$R^{11}$, $R^{13}$ unabhängig voneinander Wasserstoff oder eine aliphatische, cycloaliphatische, aromatisch-aliphatische oder aromatische Gruppe,
$R^{12}$, $R^{14}$ unabhängig voneinander eine aliphatische, cycloaliphatische, aromatisch-aliphatische oder aromatische Gruppe,
wobei $R^{11}$ und $R^{12}$ oder $R^{13}$ und $R^{14}$ mit dem jeweiligen Stickstoff ein Ringsystem bilden können
X eine Cyano- , Carbonamid- oder Carbonestergruppe,
Y Wasserstoff oder eine aliphatische Gruppe, cycloaliphatische Gruppe, aromatisch-aliphatische Gruppe, oder aromatische Gruppe
D eine aromatische Gruppe,

einsetzt.

**8.** System nach Anspruch 7, wobei D ausgewählt ist aus der Gruppe bestehend aus Benzol, Naphthalin, Diphenyl, Azobenzol, Thiophen, Benzthiazol, Benzisothiazol, Thiazol, Thiadiazol, Triazol, Benztriazol, Indazol, Pyrazol und Anthrachinon.

**9.** System nach den Ansprüchen 1 bis 8, wobei sich Komponente b) auf der Oberfläche von Komponente a) befindet.

**10.** System nach den Ansprüchen 1 bis 8, wobei Komponente a) und Komponente b) vermischt vorliegen.

**11.** System nach den Ansprüchen 1 bis 10, wobei das System als Faser vorliegt.

**12.** System nach den Ansprüchen 1 bis 10, wobei das System als Flächengebilde vorliegt.

**13.** System nach den Ansprüchen 1 bis 10, wobei das System als Formkörper vorliegt.

**14.** Verfahren zur Herstellung eines Systems gemäß den Ansprüchen 1 bis 13, **dadurch gekennzeichnet, daß** man eine Komponente a) durch Polymerisation mindestens eines zur Bildung eines Polyamids geeigneten Monomers und eines sterisch gehinderten Piperidin-Derivats, das eine zur Amidbildung hinsichtlich der Polymerhauptkette des Polyamids fähige funktionelle Gruppe aufweist herstellt und anschließend Komponente a) mit einem 2,6-Diaminopyridin-Derivat als Komponente b) versetzt.

**Claims**

**1.** A system comprising

a) a polyamide comprising a sterically hindered piperidine derivative attached to the polymer chain by chemical bonding, and
b) a 2,6-diaminopyridine derivative.

**2.** The system according to claim 1 wherein the piperidine derivative used is a piperidine derivative of the formula

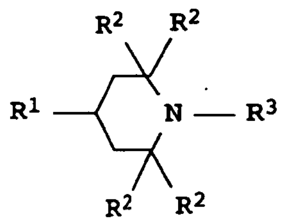

where

$R^1$ is a functional group capable of amide formation with the polymer chain of the polyamide,
$R^2$ is an alkyl group, and
$R^3$ is hydrogen, $C_1$-$C_4$-alkyl or-O-$R^4$, in which $R^4$ is hydrogen or $C_1$-$C_7$-alkyl.

**3.** The system according to claim 2 wherein $R^1$ is a group -(NH)$R^5$, where $R^5$ is hydrogen or $C_1$-$C_8$-alkyl, or is a carboxyl group or a carboxyl derivative or a group $-(CH_2)_x(NH)R^5$, where x is from 1 to 6 and $R^5$ is hydrogen or $C_1$-$C_8$-alkyl, or a group- $(CH_2)_yCOOH$, where y is from 1 to 6, or a $-(CH_2)_yCOOH$ acid derivative, where y is from 1 to 6.

**4.** The system according to claim 2 or 3 wherein $R^1$ is $NH_2$.

**5.** The system according to any of claims 2 to 4 wherein $R^2$ is methyl.

**6.** The system according to any of claims 1 to 5 wherein the piperidine derivative used is 4-amino-2,2,6,6-tetramethylpiperidine.

**7.** The system according to any of claims 1 to 6 wherein component b) is a 2,6-diaminopyridine derivative of the formula

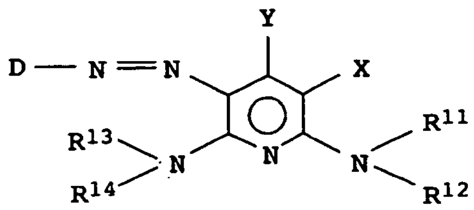

where
$R^{11}$ and $R^{13}$ are independently hydrogen or an aliphatic, cycloaliphatic, aromatic/aliphatic or aromatic group,
$R^{12}$ and $R^{14}$ are independently an aliphatic, cycloaliphatic, aromatic/aliphatic or aromatic group,
and $R^{11}$ and $R^{12}$ or $R^{13}$ and $R^{14}$ may combine with the respective nitrogen to form a ring system,
X is a cyano, carboxamide or carboxylate group,
Y is hydrogen or an aliphatic group, a cycloaliphatic group, an aromatic/aliphatic group or an aromatic group, and
D is an aromatic group.

**8.** The system according to claim 7 wherein D is selected from the group consisting of benzene, naphthalene, biphenyl, azobenzene, thiophene, benzothiazole, benzisothiazole, thiazole, thiadiazole, triazole, benzotriazole, indazole, pyrazole and anthraquinone.

**9.** The system according to any of claims 1 to 8 wherein component b) is present on the surface of component a).

**10.** The system according to any of claims 1 to 8 wherein component a) and component b) are present as a mixture.

**11.** The system according to any of claims 1 to 10 in the form of a fiber.

**12.** The system according to any of claims 1 to 10 in the form of a sheetlike structure.

**13.** The system according to any of claims 1 to 10 in the form of a molding.

**14.** A process for preparing a system according to any of claims 1 to 13, which comprises preparing a component a) by polymerization of at least one monomer suitable for forming a polyamide and of a sterically hindered piperidine derivative comprising a functional group capable of amide formation with the polymer main chain of the polyamide and then admixing component a) with a 2,6-diaminopyridine derivative as a component b).

**Revendications**

**1.** Système constitué de :

a) un polyamide contenant un dérivé de pipéridine à encombrement stérique chimiquement lié à la chaîne polymère et
b) un dérivé de 2,6-diaminopyridine.

**2.** Système selon la revendication 1, dans lequel on met en oeuvre, en tant que dérivé de pipéridine, un dérivé de formule

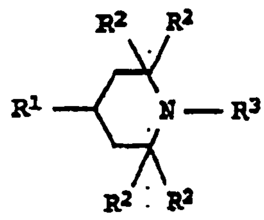

dans laquelle

$R^1$ représente un groupe fonctionnel capable de formation d'amide vis-à-vis de la chaîne polymère du polyamide,
$R^2$ représente un radical alkyle,
$R^3$ représente de l'hydrogène, un radical alkyle en $C_1$ à $C_4$ ou O-$R^4$, où $R^4$ représente de l'hydrogène ou un radical alkyle en $C_1$ à $C_7$.

**3.** Système selon la revendication 2, dans lequel $R^1$ représente un groupe -(NH)$R^5$, où $R^5$ représente de l'hydrogène ou un radical alkyle en $C_1$ à $C_8$, ou un groupe carboxyle ou un dérivé carboxylique ou un groupe $-(CH_2)_x(NH)R^5$, où X a une valeur de 1 à 6 et $R^5$ représente de l'hydrogène ou un radical alkyle en $C_1$ à $C_8$ ou un groupe - $(CH_2)_yCOOH$, où Y a une valeur de 1 à 6, ou un dérivé d'acide $-(CH_2)_yCOOH$, où Y a une valeur de 1 à 6.

**4.** Système selon les revendications 2 ou 3, dans lequel $R^1$ représente $NH_2$.

**5.** Système selon les revendications 2 à 4, dans lequel $R^2$ représente un radical méthyle.

**6.** Système selon les revendications 1 à 5, dans lequel on met en oeuvre, en tant que dérivé de pipéridine, de la 4-amino-2,2,6,6-tétraméthylpipéridine.

**7.** Système selon les revendications 1 à 6, dans lequel on met en oeuvre, en tant que composant b), un dérivé de 2,6-diaminopyridine de formule

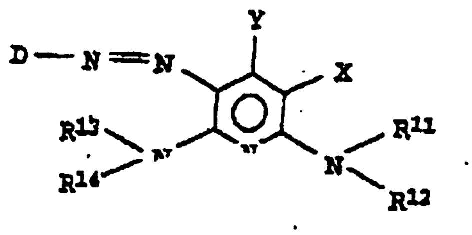

dans laquelle :

$R^{11}$, $R^{13}$ représentent indépendamment l'un de l'autre de l'hydrogène ou un groupe aliphatique, cycloaliphatique, aromatique-aliphatique ou aromatique,
$R^{12}$, $R^{14}$ représentent indépendamment l'un de l'autre un groupe aliphatique, cycloaliphatique, aromatique-aliphatique ou aromatique,
dans lequel $R^{11}$ et $R^{12}$ ou $R^{13}$ et $R^{14}$ peuvent former un système de noyau avec l'azote respectif,
X représente un groupe cyano, amide carboxylique ou ester carboxylique,
Y représente de l'hydrogène ou un groupe aliphatique, cycloaliphatique, aromatique-aliphatique ou aromatique,
D représente un groupe aromatique.

**8.** Système selon la revendication 7, dans lequel D est choisi dans le groupe formé par le benzène, le naphtalène, le diphényle, l'azobenzène, le thiophène, le benzothiazole, le benzoisothiazole, le thiazole, le thiadiazole, le triazole, le benzotriazole, l'indazole, le pyrazole et l'anthraquinone.

**9.** Système selon les revendications 1 à 8, dans lequel le composant b) se trouve à la surface du composant a).

**10.** Système selon les revendications 1 à 8, dans lequel le composant a) et le composant b) sont mélangés.

**11.** Système selon les revendications 1 à 10, dans lequel le système se présente sous forme de fibre.

**12.** Système selon les revendications 1 à 10, dans lequel le système se présente sous forme d'article plat.

**13.** Système selon les revendications 1 à 10, dans lequel le système se présente sous forme de corps façonné.

**14.** Procédé de préparation d'un système selon les revendications 1 à 13, **caractérisé en ce que** l'on prépare un composant a) par polymérisation d'au moins un monomère approprié à la formation de polyamide et d'un dérivé de pipéridine à encombrement stérique, lequel présente des groupes fonctionnels capables de formation d'amide au niveau de la chaîne polymère principale du polyamide, et que l'on mélange ensuite le composant a) à un dérivé de 2,6-diaminopyridine en tant que composant b).